Europäisches Patentamt

European Patent Office

Office européen des brevets

(19)

(11) EP 0 708 271 B1

(12) FASCICULE DE BREVET EUROPEEN

(45) Date de publication et mention
de la délivrance du brevet:
**09.12.1998 Bulletin 1998/50**

(51) Int Cl.⁶: **F16H 1/28**

(21) Numéro de dépôt: **95440065.1**

(22) Date de dépôt: **13.10.1995**

(54) **Réducteur à train épicycloidal avec châssis fixe**

Epizyklisches Untersetzungsgetriebe mit ortsfestem Rahmen

Epicyclic reduction gear with a fixed frame

(84) Etats contractants désignés:
**BE CH DE ES GB IT LI NL**

(30) Priorité: **18.10.1994 FR 9412576**

(43) Date de publication de la demande:
**24.04.1996 Bulletin 1996/17**

(73) Titulaire: **XINETIX SARL**
**88100 Saint Die (FR)**

(72) Inventeur: **Poulin, Jean-Louis**
**F-88100 Saint Die (FR)**

(74) Mandataire: **Nuss, Pierre et al**
**10, rue Jacques Kablé**
**67080 Strasbourg Cédex (FR)**

(56) Documents cités:
**FR-A- 938 913**     **FR-A- 1 533 859**
**FR-A- 2 173 486**     **US-A- 3 258 995**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne le domaine de la transmission de mouvement et de couple en rotation, et a pour objet un mécanisme de transmission, plus particulièrement un réducteur, à train épicycloïdal et avec châssis fixe, c'est-à-dire sans châssis tournant.

Il existe déjà actuellement de nombreuses réalisations de réducteurs planétaires à trains d'engrenages épicycloïdaux qui présentent théoriquement l'avantage de pouvoir transmettre des couples élevés dans un encombrement réduit, du fait de la division de l'intensité des efforts à transmettre par le nombre de satellites qu'ils comportent.

Cependant, dans la pratique, la réalisation de ces mécanismes à engrenages donne naissance à des difficultés techniques importantes et difficiles à résoudre, liées principalement aux imperfections de fabrication et aux caractéristiques limitées, en terme de résistance, des matériaux et des éléments constitutifs.

Cette dernière source de difficultés résulte en premier lieu des roulements assurant le guidage en rotation des satellites sur le châssis tournant, dont les capacités, en termes de charges, sont généralement largement dépassées par les possibilités des engrenages.

En vue de tenter de pallier, au moins en partie, les inconvénients précités, il a été proposé par le brevet français n° 1 533 859 un mécanisme de transmission à engrenages épicycloïdaux essentiellement constitué d'une part, par un pignon ou une roue planétaire engrenant avec un train épicycloïdal comprenant plusieurs pignons satellites, d'autre part, par deux couronnes latérales espacées, à denture intérieure, engrenant avec lesdits pignons satellites et solidaires du châssis, et, enfin, par une couronne centrale à denture intérieure, engrenant avec lesdits pignons satellites et solidaire, au moins cinétiquement, avec l'organe à entraîner.

Ce mécanisme connu comporte également un ensemble de cages annulaires qui supportent radialement les satellites.

Les charges radiales importantes générées par les engrènements des satellites et des couronnes à denture intérieure sont supportées par ces cages annulaires intérieures, mais le positionnement régulier des satellites autour desdites cages annulaires et des pignons ou roues planétaires n'est pas assuré au montage.

D'autre part, ces cages annulaires sont disposées dans des rainures sur les satellites, engendrant de ce fait des difficultés de montage, et les dentures du pignon planétaire central doit être situé dans un plan passant par les centres de la longueur des dents des satellites.

La présente invention a notamment pour but de perfectionner un mécanisme du type décrit précédemment, en supprimant les difficultés de montage inhérent à l'emboîtement des cages annulaires dans des rainures, en facilitant le positionnement régulier au montage des satellites autour des pignons ou roues planétaires, et en adoptant une construction permettant de compenser les imprécisions de fabrication; de s'affranchir de la position centrale du pignon solaire et d'utiliser si nécessaire une denture hélicoïdale.

A cet effet, la présente invention a pour objet un mécanisme de transmission, notamment réducteur, à train épicycloïdal et avec châssis fixe, c'est-à-dire non tournant, constitué, d'une part, par un pignon ou une roue planétaire engrenant avec un train épicycloïdal comprenant au moins trois pignons satellites, d'autre part, par deux couronnes latérales espacées, à denture intérieure, engrenant avec les dits pignons satellites et solidaires du châssis, et, enfin, par une couronne centrale à denture intérieure, engrenant avec lesdits pignons satellites et solidaire, au moins cinétiquement, avec l'organe à entraîner, le pas normal des dentures de tous les engrenages précités étant identique, caractérisé en ce que les pignons satellites sont libres dans leur direction axiale et sont prolongés, à leurs deux extrémités, par des portions cylindriques lisses prenant appui, avec faculté de roulement, sur des bagues support de guidage en rotation, guidés dans la direction axiale des flasques latéraux obturant le volume délimité par les couronnes et comprenant notamment les pignons satellites épicycloïdaux.

L'invention sera mieux comprise grâce à la description ci-après, qui se rapporte à un mode de réalisation préféré, donné à titre d'exemple non limitatif, et expliqué avec référence aux dessins schématiques annexés, dans lesquels:

la figure 1 est une vue en coupe d'un mécanisme de transmission selon l'invention;
les figures 2A, 2B et 2C montrent, d'une part, les efforts engendrés sur des engrenages classiques lors de la transmission de couples (fig. 2A et 2B) et, d'autre part, les composantes des efforts résultants au niveau de la denture;
la figure 3 illustre schématiquement les efforts présents dans le mécanisme conforme à l'invention; et
la figure 4 illustre schématiquement les efforts s'exerçant sur un pignon satellite.

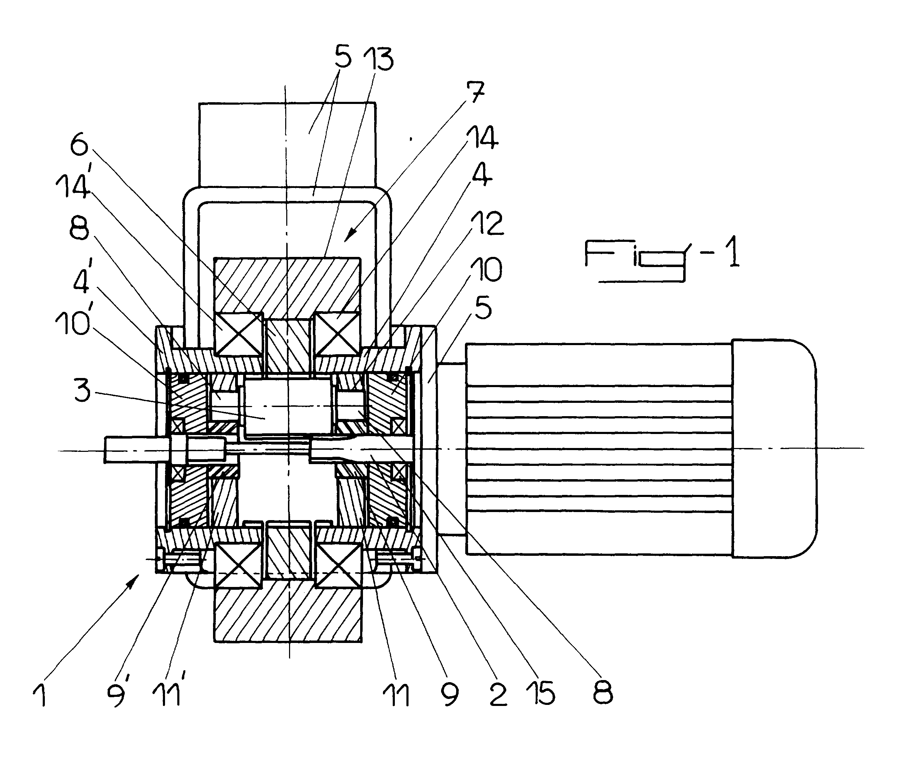

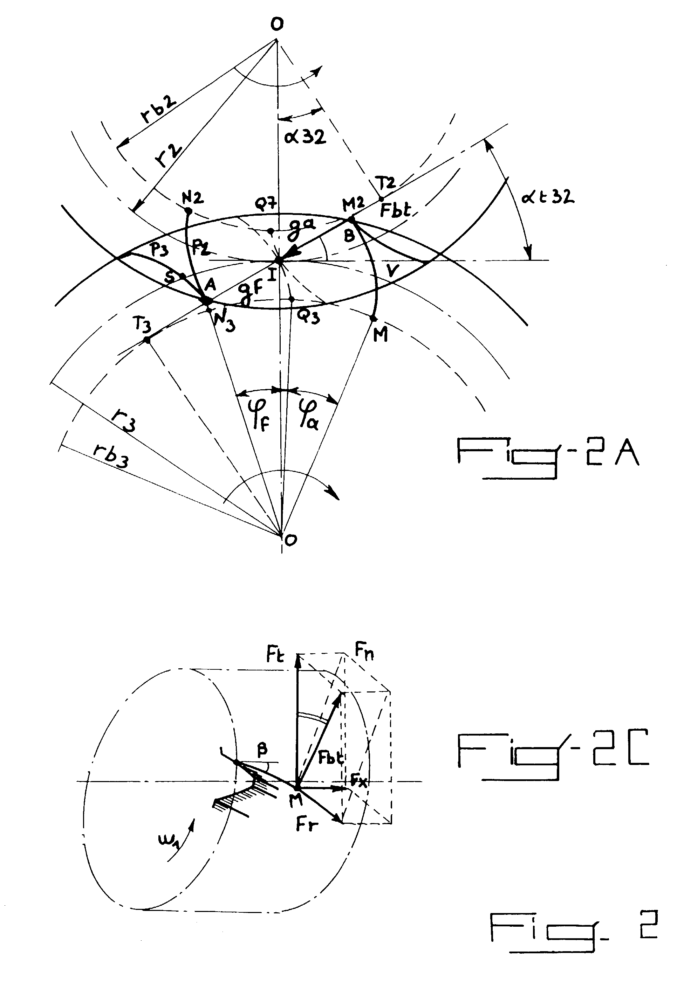

Comme le montre la figure 1 des dessins annexés, le mécanisme de transmission 1, du type réducteur, à train épicycloïdal et sans châssis tournant, est essentiellement constitué, d'une part, par un pignon ou une roue planétaire 2 engrenant avec un train épicycloïdal comprenant au moins trois pignons satellites 3, d'autre part, par deux couronnes latérales 4, 4' espacées, à denture intérieure, engrenant avec lesdits pignons satellites 3 et solidaires du châssis 5, et, enfin, par une couronne centrale 6 à denture intérieure, engrenant avec les dits pignons satellites 3 et solidaire, au moins cinétiquement, avec l'organe à entraîner 7, le pas normal des dentures de tous les engrenages précités étant identique.

Conformément à l'invention, les pignons satellites 3 sont libres dans leur direction axiale et sont prolongés, à leurs deux extrémités, par des portions cylindriques lisses 8 prenant appui, avec faculté de roulement, sur des bagues support 9, 9' de guidage en rotation, guidés dans la direction axiale par des flasques latéraux 10, 10' obturant le volume délimité par les couronnes précités 4, 4' et 6 et comprenant notamment les pignons satellites 3 épicycloïdaux.

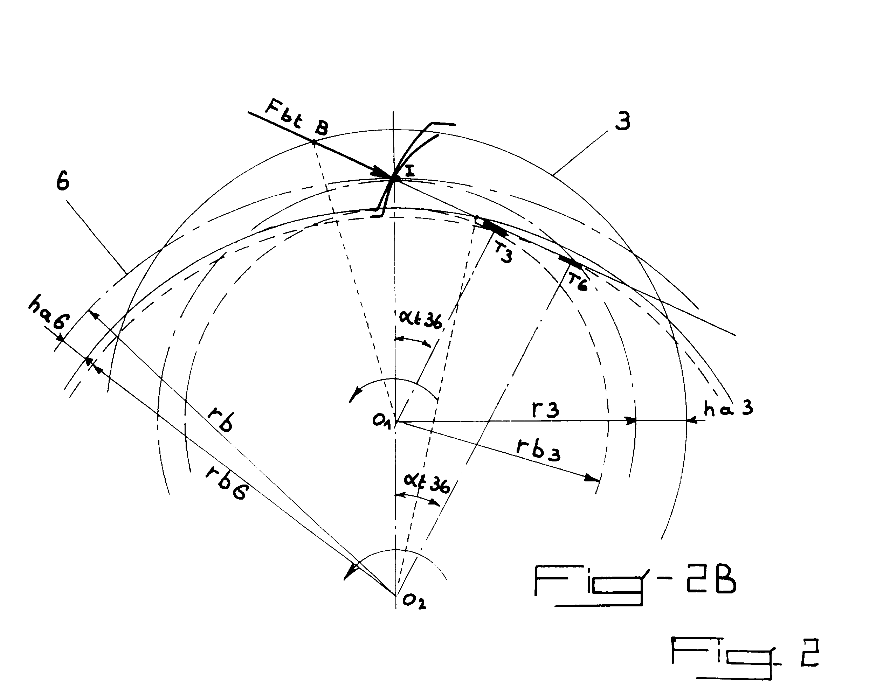

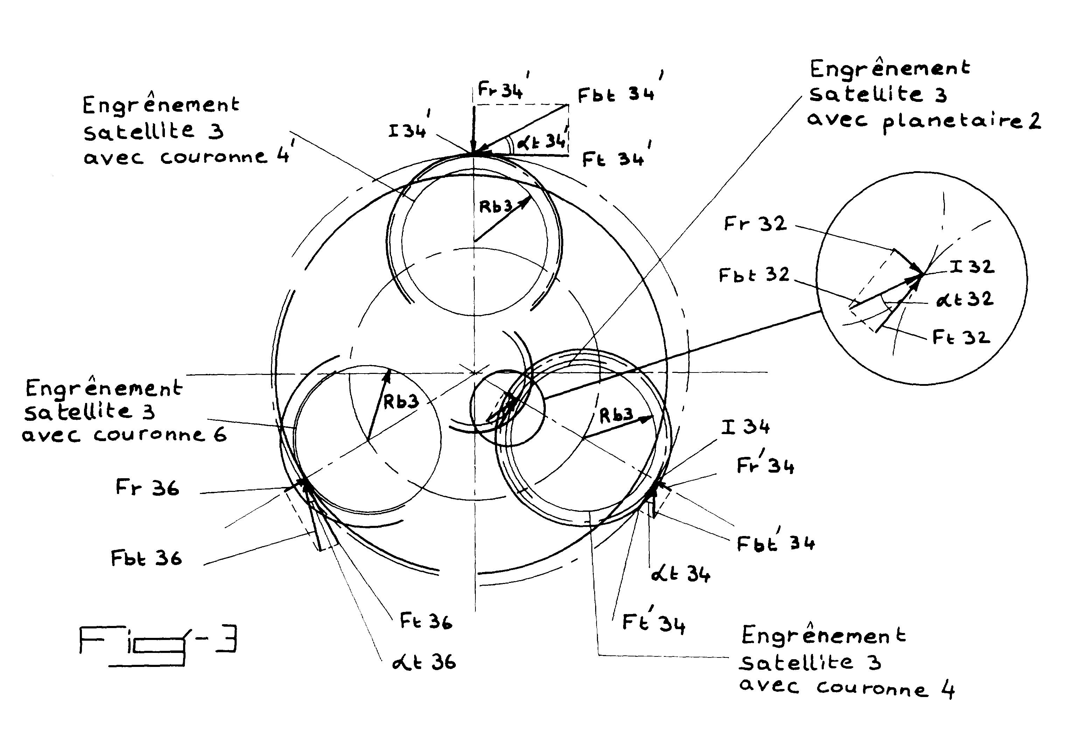

Les pignons satellites 3, par exemple au nombre de trois (voir figure 3), sont entraînés par le pignon ou la roue planétaire 2 et entraînant la couronne centrale 6 et roulent par l'intermédiaire de leur portions cylindriques lisses 8 sur les bagues support 9,9' en engrenant avec les couronnes latérales 4,4' fixes.

Dans le cadre de la présente invention, le demandeur a tenu compte du fait que dans le cas de dentures à développante de cercle, comme cela est le cas pour le mécanisme selon l'invention, les efforts engendrés sur les engrenages par le couple à transmettre passent par le point de tangence I des cercles primitifs de fonctionnement, et sont tangents aux cercles de base des roues couronnes ou pignons dentées composant l'engrenage.

Cette particularité est représentée sur la figure 2A pour le cas de deux engrenages à denture extérieure, tels que la roue ou le pignon planétaire 2 et un pignon satellite 3, par exemple, et sur la figure 2B pour le cas d'un pignon à denture extérieure engrênant avec une couronne à denture intérieure, tels qu'un pignon satellite 3 avec la couronne centrale 6, par exemple.

Dans ce cas, l'effort perpendiculaire aux axes de rotation des engrenages sur les dentures peut être directement déduit du couple auquel est soumis le pignon, la roue ou la couronne dentée par la formule :

$$Fbt = C/Rb$$

avec

C = couple sur l'engrenage
Rb = rayon du cercle de base

Fbt = effort sur la denture perpendiculairement aux axes de rotation et tangent au cercle de base.

On en déduit alors, à partir de l'angle de pression apparent de fonctionnement $\alpha t$, les efforts tangentiels Ft et radiaux Fr aux cercles primitifs de fonctionnement (figure 2C des dessins annexés) :

$$Ft = Fbt \times \cos(\alpha t) \qquad Fr = Fbt \times \sin(\alpha t)$$

L'effort axial Fx dû à l'inclinaison de denture se déduisant de l'inclinaison $\beta b$ de l'hélice au cercle de base, on peut alors exprimer :

$$Fx = Fbt \times \tan(\beta b) = Ft \times \tan(\beta)$$

Or, la définition de la denture étant identique pour tous les engrenages composant le mécanisme selon l'invention, l'angle d'hélice au cercle de base est identique pour tous.

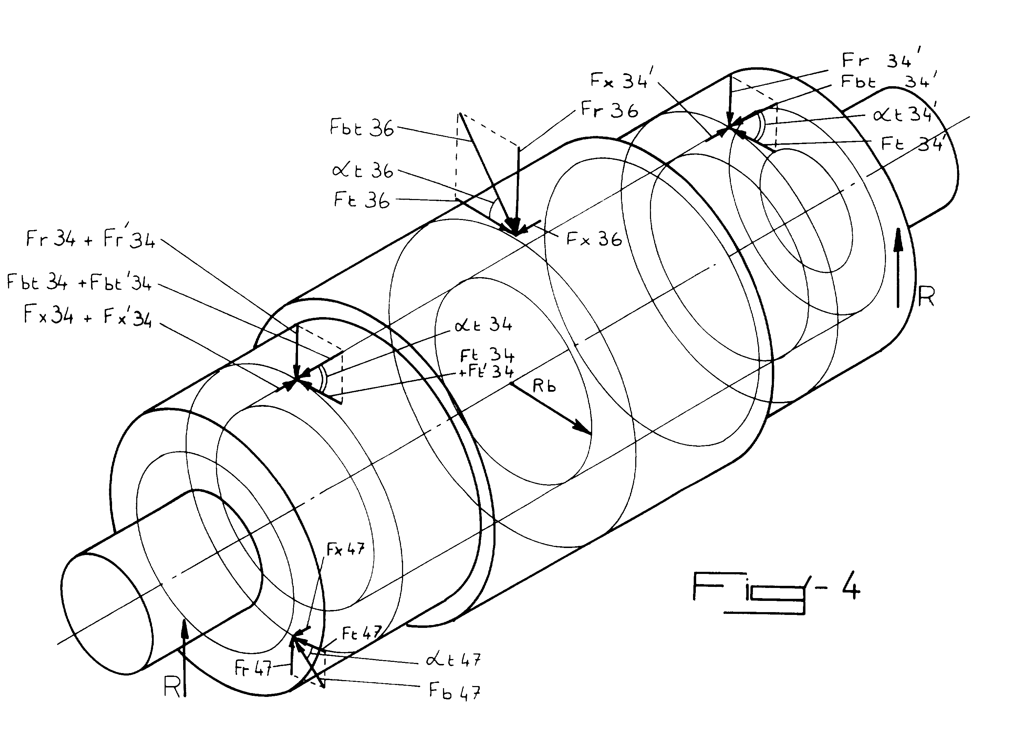

En se reportant à présent aux figures 3 et 4 des dessins annexés, il en résulte, en effectuant l'examen de l'engrènement du planétaire simple composé des couronnes 4,4' et 6 engrenant avec un pignon satellite 3, que l'équilibre des couples se traduit par le fait que le couple dû à l'engrènement du pignon satellite 3 avec la couronne centrale 6 (C36) est égal et opposé au couple dû à l'engrènement du pignon satellite 3 avec les couronnes latérales 4,4' (C34). Donc (C36) = - (C34), ce qui permet d'aboutir aux efforts tangentiels par :

$$Fbt(36) = - Fbt(34) = C36/Rb3 = - C'36/Rb3$$

et aux efforts axiaux par :

$$Fx(36) = - Fx(34) = Fbt(36) \times \tan(\beta b) = - Fbt(36) \times \tan(\beta b)$$

Ce qui montre que les efforts axiaux sont équilibrés pour cet engrènement.

De même, l'examen de l'engrènement du planétaire simple, composé des couronnes 4 et 4' et du pignon planétaire 2 engrenant avec un pignon satellite 3, montre que l'équilibre des couples se traduit par le fait que le couple dû à l'engrènement du pignon 3 avec le pignon planétaire 2 (C32) est égal et opposé au couple dû à l'engrènement du pignon satellite 3 avec les couronnes 4, 4' (C'34). Donc (C32) = - (C'34), ce qui permet d'aboutir aux efforts tangentiels par:

$$Fbt(32) = - Fbt'(34) = C32/Rb3 = - C'34/Rb3$$

et aux efforts axiaux par:

$$Fx(32) = - Fx'(34) = Fbt(32) \times \tan(\beta b) = - Fbt'(34) \times \tan(\beta b)$$

Ce qui montre également que les efforts axiaux sont équilibrés pour cet engrènement.

Ainsi, en application des lois de la mécanique, il est possible d'affirmer ainsi que l'ensemble des forces axiales engendrées dans les pignons satellites 3 du train planétaire composé par les couples moteur et résistant est parfaitement équilibré, et ne nécessite aucun appui dans le sens axial des dits pignons satellites 3.

Ainsi, en faisant le bilan des forces au niveau des différents engrènements faisant partie du mécanisme de transmission 1 selon l'invention, à savoir couronnes latérales 4, 4'/pignons satellites 3, couronne centrale 6/pignons satellites 3 et pignon ou roue planétaire 2/pignons satellites 3, on constate que les forces tangentielles et axiales (pour des dentures hélicoïdales) au niveau des pignons satellites 3 sont parfaitement équilibrées. De plus, les forces radiales résultant de l'angle de pression des engrenages sont centripètes et tendent à rapprocher les pignons satellites de l'axe central (axe du pignon ou de la roue planétaire 2) du mécanisme de transmission 1, ces forces étant entièrement reprises et compensées au niveau des bagues support 9, 9', présentent spécifiquement une très grande résistance.

En outre, dans le cas où les différents engrènements sont réalisés par l'intermédiaire de dentures hélicoïdales, les efforts axiaux exercés sur les couronnes 4, 4' et 6 et sur le pignon ou la roue planétaire 2 du fait de leur engrènement avec les pignons satellites 3 sont tous transmis directement au châssis 5 pour les couronnes 4 et 4' qui en sont solidaires, par l'intermédiaire de l'organe à entraîner 7 et des roulements 14 et 14' pour la couronne 6, par l'intermédiaire des roulements 15 et 15' (ou éventuellement des roulements de l'organe moteur) pour le pignon ou roue planétaire 2.

Selon une première caractéristique de l'invention, représentée à la figure 1 des dessins annexés, le mécanisme de transmission 1 comporte deux anneaux de positionnement 11, 11', préférentiellement en un matériau élastique, montés autour des bagues support 9, 9' et comportant des logements circonférentiellement équidistants entre eux et pouvant (en vue de leur maintien en position) recevoir les portions cylindriques lisses 8 des pignons satellites 3, l'ensemble formé par le train de pignons satellites 3, les bagues support 9, 9' et les anneaux de positionnement 11, 11' étant libres individuellement dans un plan perpendiculaire aux axes desdits pignons satellites 3, les éléments constitutifs précités 3, 9, 9', 11, 11' dudit ensemble n'étant pas rigidement liés entre eux.

Cette liberté de mouvement des différents éléments 3, 9, 9', 11, 11', indépendants l'un de l'autre, dudit ensemble entre eux dans les directions perpendiculaires aux axes des pignons satellites 3 (et donc de la roue ou pignon planétaire 2), permet à chacun des éléments satellites 3, bagues 9 et 9' de prendre la position la mieux appropriée pour les efforts radiaux résultants centripètes qui s'exercent sur les bagues 9 et 9' se neutralisent, même en présence d'imperfections de fabrication, et par voie de conséquence assure la répartition de manière égale des charges tangentielles dues au couple à transmettre sur chacune des dentures des satellites 3. Le couple est ainsi divisé de manière égale par un nombre n (n étant égal au nombre de satellites) sur tous les engrènements.

Les deux anneaux de positionnement 11 et 11', permettent également de faciliter le montage des pignons satellites 3 en fixant dès le début leur répartition équidistante et uniforme autour de l'axe du pignon ou de la roue planétaire 2.

Conformément à une autre caractéristique de l'invention, la couronne centrale 6 présente un nombre de dents inférieur ou supérieur d'une quantité n au nombre de dents des couronnes latérales 4, 4', n correspondant au nombre p de pignons satellites 3 présents ou à un multiple de celui-ci.

Cette différence de nombre de dents est avantageusement compensée par un déport de denture de manière à assurer un engrènement adapté avec les pignons satellites 3.

Selon une caractéristique supplémentaire de l'invention, représentée à la figure 1 des dessins annexés, l'organe à entraîner 7 consiste en une roue ou un galet d'entraînement ou de propulsion dont la bande de roulement 13 est assujettie sur la circonférence extérieure de la couronne centrale 6 et repose, par l'intermédiaire de deux paliers à roulement intermédiaires 14, 14', sur les deux couronnes latérales 4 et 4', permettant de limiter les forces de frottement entre l'organe mobile extérieur et le châssis 5.

Toutefois, l'organe à entraîner 7, monté sur la couronne centrale 6, peut également consister en un pignon ou roue denté(e) entraînant une autre roue ou pignon dentée, en un pignon ou une roue engrenant avec une chaîne, en une poulie entraînant une courroie ou analogue (non représentés).

Le pignon planétaire 2 peut être directement constitué par l'axe du rotor d'un moteur électrique ou un arbre entraîné similaire et peut être porté par un ou des roulements 15 monté(s) dans le flasque latéral 10 ou 10' traversé par le dit arbre ou axe.

Il peut également être prévu deux arbres d'entraînement opposés comprenant chacun un engrenage planétaire 2 et traversant chacun respectivement un des deux flasques latéraux 10 ou 10', ces derniers assurant l'étanchéité au niveau des dits arbres ou axes et des couronnes latérales 4 et 4'.

Bien entendu, l'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention.

## Revendications

1. Mécanisme de transmission, notamment réducteur, à train épicycloïdal et avec châssis fixe, essentiellement constitué, d'une part, par un pignon ou une roue planétaire engrenant avec un train épicycloïdal comprenant au moins trois pignons satellites, d'autre part, par deux couronnes latérales espacées, à denture intérieure, engrenant avec les dits pignons satellites et solidaires du châssis, et, enfin, par une couronne centrale à denture intérieure, engrenant avec les dits pignons satellites et solidaire, au moins cinétiquement, avec l'organe à entraîner, le pas normal des dentures de tous les engrenages précités étant identique, caractérisé en ce que les pignons satellites (3) sont libres dans leur direction axiale et sont prolongés, à leurs deux extrémités, par des portions cylindriques lisses (8) prenant appui, avec faculté de roulement, sur des bagues support (9, 9') de guidage en rotation, guidés dans la direction axiale par des flasques latéraux (10, 10') obturant le volume délimité par les couronnes (4, 4' et 6) précitées et comprenant notamment les pignons satellites (3) épicycloïdaux.

2. Mécanisme selon la revendication 1, caractérisé en ce qu'il comporte deux anneaux de positionnement (11, 11'), préférentiellement en un matériau élastique, montés autour des bagues support (9, 9') et comportant des logements circonférentiellement équidistants entre eux et pouvant recevoir les portions cylindriques lisses (8) des pignons satellites (3), l'ensemble formé par le train de pignons satellites (3), les bagues support (9, 9') et les anneaux de positionnement (11, 11') étant libres individuellement dans un plan perpendiculaire aux axes desdits pignons satellites (3), les éléments constitutifs précités (3, 9, 9', 11, 11') dudit ensemble n'étant pas rigidement liés entre eux.

3. Mécanisme selon l'une quelconque des revendications 1 et 2, caractérisé en ce que les différents engrènements sont réalisés par l'intermédiaire de dentures hélicoïdales.

4. Mécanisme selon l'une quelconque des revendications 1 à 3, caractérisé en ce qu'il comporte trois pignons satellites (3).

5. Mécanisme selon l'une quelconque des revendications 1 à 4, caractérisé en ce que l'organe à entraîner (7) consiste en une roue ou un galet d'entraînement ou de propulsion dont la bande de roulement (13) est assujettie sur la circonférence extérieure de la couronne centrale (6) et repose, par l'intermédiaire de deux paliers à roulement intermédiaires (14, 14'), sur les deux couronnes latérales (4 et 4').

6. Mécanisme selon l'une quelconque des revendications 1 à 4, caractérisé en ce que l'organe à entraîner (7) consiste en un pignon ou roue denté(e), pouvant engrener avec une autre roue ou un autre pignon denté(e) ou encore avec une chaîne.

7. Mécanisme selon l'une quelconque des revendications 1 à 4, caractérisé en ce que l'organe à entraîner (7) consiste en une poulie entraînant une courroie.

## Patentansprüche

1. Umlaufgetriebe, insbesondere Untersetzungsgetriebe mit feststehendem Gehäuse, im wesentlichen bestehend einerseits aus einem Mittelritzel oder -zahnrad, das mit einem aus wenigstens drei Umlaufrädern bestehenden Umlaufrädersatz kämmt, andererseits aus zwei beabstandeten, seitlichen innenverzahnten Ringen, die mit den Umlaufrädern kämmen und am Gehäuse befestigt sind und schließlich aus einem innenverzahnten Mittelring, der mit den Umlaufrädern kämmt und wenigstens kinetisch mit dem anzutreibenden Bauteil verbunden ist, bei dem die Verzahnungsteilung im Normalschnitt sämtlicher vorerwähnter Verzahnungen identisch sind, dadurch gekennzeichnet, daß die Umlaufräder (3) in axialer Richtung frei beweglich und an ihren Enden durch glatte zylindrische Fortsätze (8) verlängert sind, die sich mit der Möglichkeit abzurollen, auf Tragringen (9, 9') zur Drehführung abstützen, die ihrerseits in axialer Richtung mittels seitlicher Lagerschilde geführt werden, die den von den vorerwähnten innenverzahnten Ringen (4, 4', 6) umschlossenen Raum, in dem sich insbesondere die Umlaufräder (3) befinden, abschließen.

2.  Umlaufgetriebe nach Anspruch 1, gekennzeichnet durch zwei Positionierringe (11, 11'), vorzugsweise aus einem elastischen Werkstoff, die um die Tragringe (9, 9') herum angeordnet sind und umfangsmäßig gleichmäßig voneinander beabstandete Lageranordnungen zur Aufnahme der glatten, zylindrischen Fortsätze (8) der Umlaufräder (3) aufweisen, wobei die durch den Umlaufrädersatz (3), die Tragringe (9, 9') und die Positionierringe (11, 11') gebildete Baueinheit den Einzelelementen in einer zu den Achsen der Umlaufräder (3) senkrechten Ebene aufgrund der nicht starr miteinander verbundenen vorerwähnten Bauelemente (3, 9, 9', 11, 11') eine freie Beweglichkeit gewährleistet.

3.  Umlaufgetriebe nach Anspruch 1 oder 2, dadurch gekennzeichnet, daß die verschiedenen Zahneingriffe mittels Schrägverzahnungen verwirklicht sind.

4.  Umlaufgetriebe nach einem der Ansprüche 1 bis 3, gekennzeichnet durch drei Umlaufräder (3).

5.  Umlaufgetriebe nach einem der Ansprüche 1 bis 4, dadurch gekennzeichnet, daß das anzutreibende Bauteil (7) aus einem Antriebsrad oder einer Antriebsrolle besteht, dessen oder deren Laufring (13) auf dem Außenumfang des innenverzahnten Mittelrings (6) befestigt ist und das mittels zweier Wälzlager (14, 14') auf den beiden seitlichen, innenverzahnten Ringen (4, 4') gelagert ist.

6.  Umlaufgetriebe nach einem der Ansprüche 1 bis 4, dadurch gekennzeichnet, daß das anzutreibende Bauteil (7) aus einem Ritzel oder Zahnrad besteht und für einen Eingriff mit einem anderen Zahnrad oder Ritzel oder einer Kette bestimmt ist.

7.  Umlaufgetriebe nach einem der Ansprüche 1 bis 4, dadurch gekennzeichnet, daß das anzutreibende Bauteil (7) aus einer einen Riemen antreibenden Riemenscheibe besteht.

## Claims

1.  Transmission mechanism, in particular reduction gear, with an epicyclic train and a fixed frame essentially consisting, on the one hand, of a pinion or a planet wheel meshing with an epicyclic train comprising at least three satellite pinions, on the other hand, of two spaced lateral internal ring gears, meshing with said satellite pinions and integral with the frame and, finally, of a central internal ring gear, meshing with said satellite pinions and integral, at least kinetically, with the device to be driven, the normal pitch of the teeth of all the aforementioned gears being identical, characterized in that the satellite pinions (3) are free in their axial direction and are extended at their two ends by smooth cylindrical portions (8) resting, with the ability to roll, on supporting rings (9, 9') for guidance in rotation, guided in the axial direction by lateral discs (10, 10') closing the volume defined by the aforementioned ring gears (4, 4' and 6) and comprising, in particular, epicyclic satellite pinions (3).

2.  Mechanism according to claim 1, characterized in that it comprises two positioning bands (11, 11'), preferably of a resilient material, mounted round supporting rings (9, 9') and comprising recesses which are circumferentially equidistant from one another and are able to receive the smooth cylindrical portions (8) of the satellite pinions (3), the unit formed by the train of satellite pinions (3), the supporting rings (9, 9') and the positioning rings (11, 11') being free individually in a plane perpendicular to the axes of said satellite pinions (3), the aforementioned constituent elements (3, 9, 9', 11, 11') of said unit not being rigidly connected to one another.

3.  Mechanism according to any one of claims 1 and 2, characterized in that the various meshings are produced by means of helical gearing.

4.  Mechanism according to any one of claims 1 to 3, characterized in that it comprises three satellite pinions (3).

5. Mechanism according to any one of claims 1 to 4, characterized in that the device to be driven (7) consists of a driving or propelling wheel or roller of which the tread (13) is fixed on the external circumference of the central ring gear (6) and rests, via two intermediate rolling bearings (14, 14'), on the two lateral ring gears (4 and 4').

6. Mechanism according to any one of claims 1 to 4, characterized in that the device to be driven (7) consists of a toothed pinion or wheel capable of meshing with another toothed wheel or another toothed pinion or again with a chain.

7. Mechanism according to any one of claims 1 to 4, characterized in that the device to be driven (7) consists of a pulley driving a belt.

Fig-1

Fig-2A

Fig-2C

Fig. 2

Fig-2B

Fig. 2

Engrênement
Satellite 3
avec couronne 4'

Fr 34'    Fbt 34'

I 34'      ⍺t 34'

Ft 34'

Engrênement
Satellite 3
avec planetaire 2

Rb3

Fr 32

Fbt 32

I 32

⍺t 32

Ft 32

Engrênement
Satellite 3
avec couronne 6

Rb3    Rb3

I 34

Fr' 34

Fr 36

Fbt 36

Fbt' 34

⍺t 34

Ft 36

Ft' 34

⍺t 36

Engrênement
Satellite 3
avec couronne 4

Fig-3

EP 0 708 271 B1

Fig-4